# EUROPÄISCHE PATENTSCHRIFT

(11) **EP 2 619 048 B1**
(45) Veröffentlichungstag und Bekanntmachung des Hinweises auf die Patenterteilung: **03.12.2014**
(21) Anmeldenummer: 11755334.7
(22) Anmeldetag: 12.09.2011
(51) Int. Cl.: B60T 7/12, B60T 8/17, B60T 8/18, B60T 13/26, B60T 13/40, B60T 13/46, B60T 13/57, B60T 13/66, B60T 15/02, B60T 15/04, B60T 15/18, B60T 15/30, B60T 17/22

(54) **STEUERVENTIL FÜR SELBSTTÄTIGE DRUCKLUFTBREMSEN**
CONTROL VALVE FOR AUTOMATIC COMPRESSED-AIR BRAKES
SOUPAPE DE COMMANDE POUR FREINS À AIR COMPRIMÉ AUTOMATIQUES

(30) Priorität: 20.09.2010 EA 201001387
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); HELLER, Martin, 85716 Unterschleißheim (DE); KRUSCHE, Michael, 80802 München (DE); KRYLOV, Vladimir, Moskau 127322 (RU); ROMANOV, Sergey, Moskau 111558 (RU); SIMON, Timm, 80636 München (DE)
(74) Vertreter: Schönmann, Kurt
(86) Internationale Anmeldenummer: PCT/EP2011/065718
(87) Internationale Veröffentlichungsnummer: WO 2012/038281

(56) Entgegenhaltungen:
- DE-B- 1 206 942
- US-A- 2 173 940
- US-A- 3 272 563
- US-A- 4 163 587

## Beschreibung

Die vorliegende Erfindung betrifft ein Steuerventil für selbsttätige Druckluftbremsen zur Bildung eines Bremszylinderdruckes nach Maßgabe einer Druckdifferenz zwischen einem Druck in der durchgehenden Hauptluftleitung eines Zuges und einem gespeicherten Referenzdruck, der vom Druck in der Hauptluftleitung abgeleitet ist.

Das Einsatzgebiet der vorliegenden Erfindung ist der Schienenfahrzeugbau. Schienenfahrzeuge haben meist eine selbsttätige (automatische) Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen ausgeführt.

Daneben haben Steuerventil weitere Funktionen, die mit der Füllung, dem Abschluss und der Entlüftung von Volumen mit gespeicherter Druckluft, mit der Einstellung bestimmter statischer Kennlinien des Bremszylinderdruckes und mit der Beschleunigung der Übertragung von als Druckhöhe kodierten Signalen in der Hauptluftleitung zusammenhängen.

Schließlich kommen Funktionen hinzu, die auch bei schneller und starker Änderung des Druckes in der Hauptluftleitung eine nur allmähliche Änderung des Druckes in den Bremszylindern sichern, um den auftretenden Ruck an den Fahrzeugen und die Längskräfte innerhalb des Zuges zu begrenzen.

Aus dem Fachbuch Asadtschenko, V.R.: Avtomatitscheskije Tormosa podvishnogo Sostawa sheleznogo Transporta (russ.), Moskau 2002, Seite 71 ff geht das allgemeine Prinzip eines Steuerventils hervor. Das Steuerventil ist gewöhnlich an einem Ventilträger angebracht und die notwendigen Druckluftverbindungen werden mit den betreffenden Anschlüssen am Ventilträger hergestellt. Innerhalb des Trägers befinden sich Kammern für einen Steuerdruck S (Schieberkammer-Druck) und den Referenzdruck A. Das Steuerventil besteht hier aus einem Hauptteil und einem Leitungsteil. Die Erzeugung des Bremszylinderdruckes obliegt dem Hauptteil, während das Leitungsteil den Steuerdruck S erzeugt.

Beide Drücke, A und S, dienen zur Steuerung des Hauptteils, wobei der Druck A beim Anlegen der Bremse die Referenz zum Regelbetriebsdruck, also des ursprünglichen Druckes in der Hauptluftleitung in Fahrtstellung, der Druck S die zeitkorrigierte Referenz zum aktuellen Druck in der Hauptluftleitung während der Bremsung herstellt

Wesentliche Bestandteile des Hauptteils sind ein Steuerkolben, eine auf diesen wirkende Druckfeder, ein integriertes Doppelsitzventil zum Be- oder Entlüften des angeschlossenen Bremszylinders sowie ein Ausgleichskolben, der vom Bremszylinderdruck gegen die Kraft zweier einstellbarer Druckfedern bewegt wird, wobei eine dieser Druckfedern mit über ein exzentrisches Element, welches Bestandteil des Steuerventilträgers ist, in drei Positionen zustellbar ist. Diese Positionen dienen der Einstellung unterschiedlicher Bremszylinderdrücke für ein leeres Fahrzeug, ein Fahrzeug mittlerer Beladung oder eines beladenen Fahrzeuges. Weiter sind ein Einlassventil zur Füllung des Bremszylinders aus einem Vorratsluftbehälter und ein Auslassventil zur Entlüftung des Bremszylinders in die Atmosphäre vorhanden.

Zusätzliche Organe und Elemente des Hauptteils können sein:
- eine Empfindlichkeitsbohrung, die den Referenzdruck A und den Referenzdruck S verbindet, solange das Steuerventil nahe seiner Ausgangsstellung (Bremse gelöst) ist
- ein Rückschlagventil mit einer Düse, über welche der Vorratsluftbehälter aus der Hauptluftleitung gefüllt werden kann
- Eine Einrichtung (Verzögerer), welche nach einem ersten Anstieg des Bremszylinderdruckes den Zustrom von Luft aus dem Vorratsluftbehälter zum Einlassventil drosselt, indem durch eine Dichtung Querbohrungen der sich bewegenden Kolbenstange überschliffen (abgeschlossen) werden.
- Eine Einrichtung, welche bei Beginn der Bremsung einen Kanal der zusätzlichen Entlüftung offen hält und ihn nach dem Beginn der Bremsung abschließt, indem durch zwei Dichtungen weitere Querbohrungen der sich bewegenden Kolbenstange überschliffen (abgeschlossen) werden.

Wesentliche Bestandteile des Leitungsteils sind ein Membrankolben, welcher durch den Druck aus der Hauptluftleitung und den Steuerdruck S beaufschlagt ist. Weiter ist ein Ventil der zusätzlichen Entlüftung der Hauptluftleitung vorhanden. Die zusätzliche Entlüftung der Hauptluftleitung durch die Steuerventile dient der Beschleunigung der Druckänderung in langen Zügen, da die Druckänderung allein durch ein an der Zugspitze befindliches Führerbremsventil keine ausreichend schnelle Wirkung im ganzen Zug entfalten kann. Die aus diesem Ventil austretende Druckluft wird über einen Kanal der zusätzlichen Entlüftung dem Hauptteil zugeführt und trifft dort auf die Einrichtung, welche den Kanal nach dem Beginn der Bremsung abschließt, um die zusätzliche Entlüftung auf das richtige Maß zu begrenzen.

Die Wirkungsweise ist folgende:
Beim Bremsen wird der Druck in der Hauptluftleitung abgesenkt. Dementsprechend sinkt auch der am Steuerkolben anstehende Druck S, während der gegenüberliegende Referenzdruck A im Wesentlichen unverändert bleibt. Die resultierende Bewegung des Steuerkolbens gegen die Druckfeder führt zu einem Öffnen des Einlassventils. Dabei strömt Druckluft aus einem Reservoir über Querbohrungen einer hohl gebohrten Kolbenstange des Steuerkolbens zum Einlassventil und über dieses zum Bremszylinder.

Der sich einstellende Bremszylinderdruck wird dadurch bestimmt, dass der Ausgleichskolben unter der Wirkung des entstehenden Bremszylinderdruckes ausweicht, bis das Einlassventil wieder schließt. Welcher Druck sich einstellt, hängt von der Stellung Druckfedern am Ausgleichskolben ab, die durch das exzentrische Element im Träger des Steuerventils handbedient umstellbar sind.

Bei einem bestimmten Hub des Steuerkolbens wird der wirksame Querschnitt der Querbohrungen durch den Verzögerer gedrosselt, indem einige von ihnen geschlossen werden, um die Geschwindigkeit des Anstieges des Bremszylinderdruckes zu verlangsamen. Ziel dabei ist es, den Bremszylinderdruck nur so schnell ansteigen zu lassen, dass gefährliche Längskräfte in langen Zügen vermieden werden. Für den Betrieb relativ kurzer Züge ist diese Einrichtung nicht erforderlich.

Die Anordnung hat den Nachteil, dass zur Drosselung des wirksamen Querschnittes durch den Verzögerer des Hauptteils mehrere Dichtungen erforderlich sind, welche über zu verschließende Bohrungen bewegt werden. Diese Bohrungen müssen einen ausreichenden Querschnitt haben, jedoch können Bohrungen der erforderlichen Größe nicht mit einer überschleifenden Dichtung abgeschlossen werden. Aus diesem Grund muß der Querschnitt auf eine größere Zahl parallel wirkender kleinerer Bohrungen aufgeteilt werden. Es entsteht ein großer baulicher Aufwand, die erreichbare Zuverlässigkeit der Dichtwirkung und die Lebensdauer sind gering, weil die über die Bohrungen schleifende Dichtung an den Kanten der Bohrungen schnell verschleißt.

Eine ähnliche Bauform eines Steuerventils ist in RU 2180628 dargestellt, wobei bezüglich der Steuerung des Durchströmquerschnittes für die Bremszylinderfüllung keine Neuerung enthalten ist, womit die genannten Nachteile weiterhin bestehen.

Eine weitere Bauform eines Steuerventils ist durch RU2395416 bekannt. Dieses zeigt keine Einrichtung zur Steuerung des Durchströmquerschnittes für die Bremszylinderfüllung. Bei einer schnellen Absenkung des Druckes wie sie von Leitungsteilen nach dem Stand der Technik nicht ausgeschlossen wird, könnte somit eine kurze Bremszeit im vorderen Zugteil auftreten, welche gefährliche Längskräfte im Zug verursachen kann.

Die Druckschrift DE 1 207 953 B1 wird als nächstliegender Stand der Technik angesehen und offenbart ein Steuerventil für eine selbsttätige Vakuumsbremseinrichtung an Schienenfahrzeugen. Das Steuerventil weist einen einerseits vom Hauptluftleitungsdruck und andererseits vom Druck der Bremszylinder-Unterkammer beaufschlagbaren Steuerkolben auf, mit dessen Hilfe ein erstes Ventilglied in der Verbindung zwischen Atmosphäre und Bremszylinder-Unterkammer und ferner ein zweites Ventilglied in der Verbindung zwischen letzterer und der Hauptluftleitung steuerbar sind. Das erste Ventilglied weist eine zentrale Bohrung und ein dazu konzentrisch angeordnetes, in Schließrichtung federbelastetes Hilfsventil auf, welches mittels eines Schaftes des Steuerkolbens vor dem Öffnen des ersten Ventilgliedes anhebbar ist. Das zweite Ventilglied ist als Doppelventil ausgebildet, dessen einer in Bremslösezustand mit dem Ventilglied zusammenwirkender Ventilsitz der Unterkammer des Bremszylinders und dessen anderer Ventilsitz der Hauptluftleitung zugeordnet sind. Die zwischen diesen Ventilsitzen liegende Kammer ist an die Steuerkolbenunterkammer angeschlossen. In der Mitte zwischen den beiden Ventilsitzen ist ein in Richtung zu dem der Unterkammer zugeordneten Ventilsitz federbelasteter und in entgegengesetzter Richtung bewegbarer Anschlagring vorgesehen, mit dessen Hilfe das durch den Steuerkolben zu dem der Hauptluftleitung zugeordneten Ventilsitz hin bewegbare Doppelventil beim Bremsenanlegen vorübergehend in dieser Mittelstellung haltbar ist. Durch das kurzzeitige, wiederholte Öffnen und Schließen der Verbindung zwischen der Bremszylinder-Unterkammer und der Hauptluftleitung wird eine gleichmäßige Unterdruckverteilung in den Bremszylinder-Unterkammern und somit ein äußerst gleichmäßiges und auch rasches Lösen sämtlicher Bremsen im Zug erreicht.

Der Erfindung liegt die Aufgabe zugrunde, ein Steuerventil zu schaffen, bei welchem der Durchströmquerschnitt für die Druckluft vom Vorratsluftbehälter zum Einlassventil des Bremszylinderdruckes so gesteuert wird, dass anfänglich ein großer Querschnitt für ein schnelles Einsetzen der Bremsung, bei stärkerer Bremsung ein gedrosselter Querschnitt für eine verlangsamte Füllung des Bremszylinders mit Druckluft eingestellt wird, wobei die Einrichtung verschleiß- und reibungsfrei arbeiten soll und die Möglichkeit gegeben ist, bei wechselnden Anforderungen bezüglich der Bremszylinderfüllzeit das Steuerventil leicht anpassen zu können.

Die Aufgabe wird ausgehend von einem pneumatischen Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Kolbenstange eine Längsbohrung und in diese mündende mindestens eine Querbohrung aufweist, wobei die mindestens eine Querbohrung in Ausgangsstellung des Steuerkolbens nur durch einen Freiraum getrennt in der Nähe einer Zuführung des Druckes (R) im Gehäuse aus dem Vorratsluftbehälter befindlich ist, und dass die Kolbenstange von einer Hülse umschlossen ist, welche in Ausgangsstellung der Kolbenstange unterhalb der mindestens einen Querbohrung einen Ringspalt zur Kolbenstange bildet. Hierdurch kann die Ventilmechanik besonders verschleiß- und reibungsfrei arbeiten.

Gemäß einer die Erfindung verbessernden Maßnahme wird vorgeschlagen, dass die Hülse axial verschieblich ausgebildet ist und mit einer mechanischen Einrichtung zur Verschiebung verbunden ist, die von der Außenseite des Gehäuses zu betätigen ist. Hierdurch lässt sich das Steuerventil bei wechselnden Anforderungen bezüglich der Bremszylinderfüllzeit leicht anpassen. Dabei kann die Hülse ein Baukastenelement des Steuerventils sein, welches gegen eine gleichartige Hülse mit geänderten Abmessungen austauschbar ist.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: einen schematischen Längsschnitt durch ein pneumatisches Steuerventil als Stellglied für eine geregelte Druckluftbeaufschlagung eines Bremszylinders nach einem ersten Ausführungsbeispiel,
- Fig.2: einen schematischen Längsschnitt durch ein pneumatisches Steuerventil nach einem anderen Ausführungsbeispiel, und
- Fig.3: einen schematischen Längsschnitt durch das Ventil für den Abschluss des Kanals KZE als Detail zu Fig. 1.

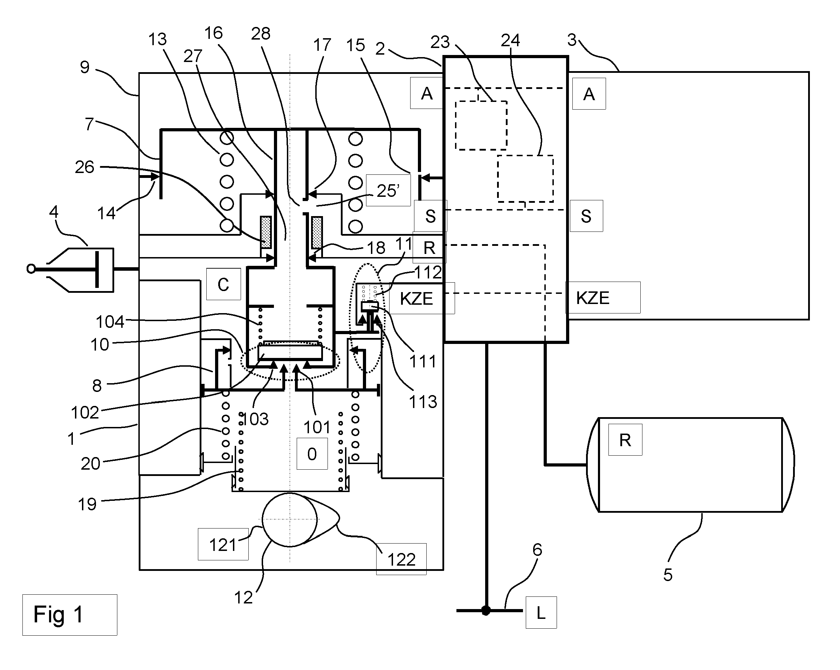

Gemäß Figur 1 besteht ein Steuerventil aus einem Hauptteil 1, einem Träger 2 und einem Leitungsteil 3. Es ist an einem hier nicht dargestellten Schienenfahrzeug montiert. Am Träger 2 sind Verbindungen zu einem Bremszylinder 4, einem Vorratsluftbehälter 5 und einer Hauptluftleitung 6 angeschlossen.

Im Träger 2 oder an diesen angeschlossen sind je ein Volumen 23 für einen Steuerdruck S und 24 für einen Referenzdruck A. Weiter enthält der Träger 2 Verbindungen für den Druck R aus dem Vorratsluftbehälter 5 und einen Kanal der zusätzlichen Entlüftung KZE, zur Leitung von Druckluft zwischen dem Hauptteil 1 und dem Leitungsteil 3.

An einer beliebigen Stelle des Steuerventils befinden sich ein nicht dargestelltes Rückschlagventil zur Füllung des Vorratsluftbehälters 5 aus der Hauptluftleitung 6, sowie ein Ventil zur manuellen Entlüftung des Referenzdruckes A.

Das Leitungsteil 3 dient dazu, mit nicht näher dargestellten Mitteln aus dem Druck der Hauptluftleitung L den Steuerdruck S und den Referenzdruck A abzuleiten, welche an das Hauptteil 1 weitergeleitet werden. Weiterhin steuert das Leitungsteil 3 bei Beginn einer Bremsung eine Verbindung von der Hauptluftleitung L zum Kanal der zusätzlichen Entlüftung KZE.

Das Hauptteil 1 beinhaltet in einem Gehäuse 9 einen Steuerkolben 7, einen Ausgleichskolben 8, ein Doppelsitzventil 10, ein Ventil 11 für den Abschluss des Kanals KZE und eine Verstelleinrichtung 12 für die Einstellung der Laststellung des Steuerventils sowie weitere Elemente wie Druckfedern, Siebe (Filter) und Dichtungen.

Das Doppelsitzventil 10 besteht aus einen Auslassventil 101, einem Ventilkörper 102, einem Einlassventil 103 und einer Druckfeder 104.

Der Steuerkolben 7 ist durch die gegenüberliegenden Drücke A und S belastet, auf der Seite des S-Druckes wirkt eine Druckfeder 13. Er arbeitet mit einer Dichtung 14 zusammen, welche beide Drücke gegeneinander abdichtet. Zu dieser Dichtung ist ein Bypass über eine Düse 15 wirksam, solange der Steuerkolben 7 sich nahe seiner Ausgangslage befindet.. Nach Fig. 1 befindet sich die Dichtung 14 im Gehäuse 9 und die Düse 15 im Steuerkolben. In einer alternativen Ausgestaltung ist auch die entgegengesetzte Anordnung möglich. Dabei ist die Dichtung 14 auf dem Steuerkolben 7 angebracht, die Düse 15 im Gehäuse 9. Als Ausgangsstellung wird im folgenden eine Position des Steuerkolbens 7 bezeichnet, in der dieser bei Gleichheit der Drücke A und S unter der Wirkung der Druckfeder 13 an seinem Anschlag auf der Seite des Druckes A befindet, dies entspricht der Fahrtstellung bei gelöster Bremse.

Der Steuerkolben 7 besitzt weiter eine Kolbenstange 16, die zwischen zwei Dichtungen 17 und 18 eine oder mehrere Querbohrungen 28 aufweist, die in eine Längsbohrung 27 mündet, welche sich bis zum Doppelsitzventil 10 fortsetzt. In Ausgangsstellung liegen die Querbohrungen 28 nur durch einen Freiraum getrennt einer Zuführung 25 der Druckluft aus dem Vorratsluftbehälter gegenüber. Unterhalb der Querbohrungen 28 ist die Kolbenstange 16 von einer Hülse 26 umschlossen, wobei sich zwischen Kolbenstange 16 und Hülse 26 ein Ringspalt bildet.

Die Hülse 26 kann dazu mehr oder weniger lang ausgebildet werden, bis hin zu einer ringförmigen Gestalt. Optional (nicht dargestellt) kann sie verschieblich und mit einer Verstelleinrichtung verbunden sein, mit der ihre Lage in axialer Richtung von der Außenseite des Gehäuses verschoben werden kann. Die Hülse 26 kann ein optionales Baukastenelement des Steuerventils sein, so dass sie in Abhängigkeit von den Forderungen spezieller Fahrzeuge entfernt oder gegen eine andere Hülse mit geänderten Abmessungen ausgetauscht werden kann.

Am Ende der Kolbenstange 16 befindet sich das Doppelsitzventil 10, welches den Druck aus dem Vorratsluftbehälter R in den Bremszylinder 4, Druck C, einläßt oder aus diesem in die Umgebung 0 ausläßt.

Der Ausgleichskolben 8 wird durch den Druck C aus dem Bremszylinder 4 belastet, ihm gegenüber steht der Umgebungsdruck 0. Auf der Seite des Umgebungsdruckes befindet sich eine oder mehrere Druckfedern 19, 20. Mindestens eine der Druckfedern kann durch die Verstelleinrichtung 12 in Richtung des Ausgleichskolbens 8 verstellt werden.

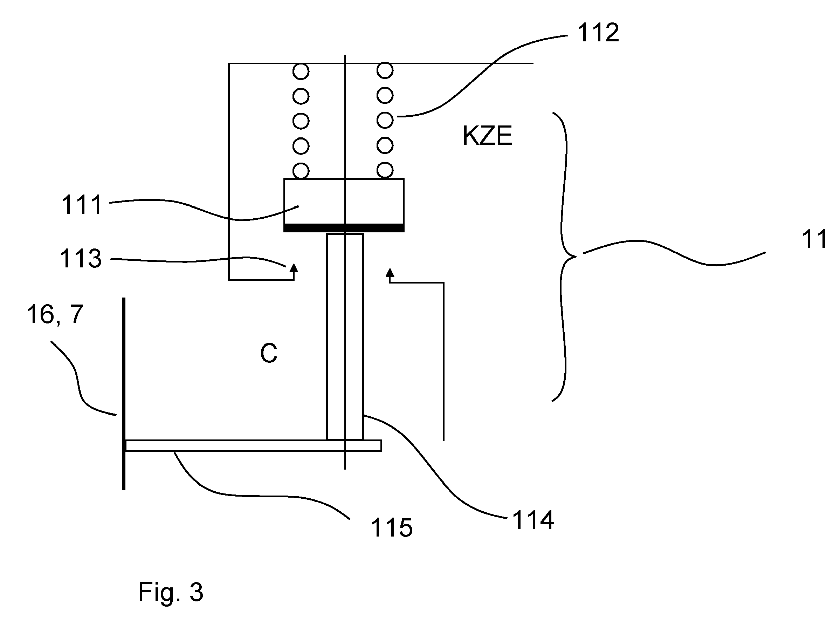

Das Ventil 11 besitzt gemäß Figur 3 für den Abschluss des Kanals KZE zu den mit dem Druck C (Bremszylinder) gefüllten Räumen einen Ventilkörper 111, einer Druckfeder 112 und einem Ventilsitz 113. Der Ventilkörper 111 und der sich auf ihn abstützende Anschlag 115 besitzen Geometrien, welche nahe einer oberen Endstellung der Kolbenstange 16 mit einem Anschlag 115 an letzterer in Eingriff kommen und den Ventilkörper 111 gegen die Druckfeder 112 öffnen, so dass eine Verbindung vom Kanal KZE zu mit dem Druck C (Bremszylinder) gefüllten Raum entsteht. Die Wirkungsweise der Anordnung beim Bremsen des Schienenfahrzeuges ist folgende:
Zum Bremsen wird durch den Lokführer oder andere Mittel der Druck in der Hauptluftleitung, ausgehend von einem Regelbetriebsdruck, abgesenkt. Diese Absenkung wird durch das Leitungsteil 3 auf den Steuerdruck S übertragen, der Referenzdruck A bleibt zunächst unverändert. Ist die Drucksenkung ausreichend schnell und stark, um die Wirkung des Drucksausgleich über die Düse 15 sowie die Anfangskraft der Druckfeder 13 zu überwinden, kommt es zu einer Bewegung des Steuerkolbens 7 in Richtung des Ausgleichskolbens 8. Diese Bewegung ist gerade so groß, dass ein Gleichgewicht von Druck- und Federkräften am Steuerkolben 7 wieder hergestellt wird. Durch die Annäherung der Kolben kommt es zu einer Berührung des Auslassventils 101 mit dem Ventilkörper 102 des Doppelsitzventils 10.

Bei einer weiteren Bewegung in diese Richtung hebt der Ventilkörper 102 vom Einlassventilsitz 103 ab, so dass Druckluft aus dem Vorratsluftbehälter 5 über die Zuführung 25', die Querbohrungen 28 und die Bohrung 27 in der Kolbenstange 16 zum Bremszylinder 4 strömen kann.

Dabei kann die Druckluft zunächst ungehindert von der Hülse 26 strömen. Dadurch ist ein schnelles erstes Anlegen der Bremse gewährleistet. Bei weiterer Bewegung des Steuerkolbens 7 und der Kolbenstange 16, entsprechend dem stärkeren Anlegen der Bremse, tauchen die Querbohrungen 28 in die Hülse 26 ein. Nunmehr kann die Druckluft von der Zuführung 25' nur noch über den Ringspalt zwischen Hülse 26 und Kolbenstange 16 strömen. Dadurch kommt es zu einem verzögerten Aufbau des Bremszylinderdruckes insbesondere bei den vorderen Fahrzeugen im Zug. Im hinteren Zugteil ist die Bremszylinderfiillung naturgemäß schon durch die begrenzte Übertragungsgeschwindigkeit der pneumatischen Signale verzögert, die Drosselung durch den Ringspalt bewirkt dann keine zusätzliche Verzögerung. Somit wird eine Angleichung der Bremszylinderfüllzeit zwischen vorderem und hinterem Zugteil erreicht und gefährliche Längskräfte vermieden. Der Vorteil daraus ist, dass der Betreiber längere und schwerere Züge fahren kann.

Unter anderen Bedingungen, z.B. beim Betrieb schneller und kürzerer Züge kann die Anforderung bestehen, die Bildung des Bremszylinderdruckes weniger oder gar nicht zu drosseln. Die erfindungsgemäße Lösung schließt daher ein, dass die Hülse 26 axial verschieblich ist. Durch ein optionale Einrichtung (nicht dargestellt) z.B. in Form einer Welle mit einem Excenter könnte die Hülse 26 mehr oder weniger weit entfernt von den Querbohrungen 28 positioniert werden, wodurch sich eine weniger bzw. mehr gedrosselte Füllung der Bremszylinder ergibt. Die Hülse 26 könnte auch entsprechend den Anforderungen spezieller Projekte gegen eine andere mit geänderten Abmessungen ausgetauscht werden, so dass sich eine gewünschte spezielle Bremszylinderfüllzeit ergibt.

Eine der Funktionen des Leitungsteils 1 besteht darin, bei Beginn einer Bremsung eine Verbindung von der Hauptluftleitung 2 zum Kanal der zusätzlichen Entlüftung KZE zu öffnen. Dadurch strömt Druckluft aus der Hauptluftleitung L über den Kanal KZE und das geöffnete Ventil 111 zum Bremszylinder und, solange das Auslassventil 102 noch geöffnet ist, gleichzeitig auch in die Umgebung 0.

Infolge des Ansteigens der Druckdifferenz A - S bewegt sich die Kolbenstange 16 mit dem Anschlag 115, der Stange 114 und dem Ventilkörper 111 nach unten bis sich letzterer auf den Ventilsitz 113 setzt und das Ventil somit geschlossen ist. Bei einem weiteren Hub des Kolbens 7 kommen die genannten Teile außer Eingriff und es entsteht ein Spiel zwischen Stange 114 und Anschlag 115 oder zwischen Stange 114 und Ventilkörper 111.

Damit ist das Ausströmen von Druckluft aus der Hauptluftleitung L bei Bremsbeginn auf diesem Weg unterbrochen, wobei sich die durch Druckfeder 13 und Fläche des Steuerkolbens 7 bestimmte Druckdifferenz A-S, somit auch ein vorbestimmter anfänglicher Bremszylinderdruck eingestellt hat. Diese Funktion dient der Beschleunigung der Fortpflanzung der Druckabsenkung in der Hauptluftleitung L auf der Zuglänge und sichert ein schnelles und richtig dosiertes erstes Anlegen der Bremse.

Der sich aufbauende Druck C übt eine Kraft auf den Ausgleichskolben 8 aus, der sich bis zur Erreichung eines Kräftegleichgewichts mit der Kraft der Druckfedern 19, 20 bewegt. Somit entspricht jede Bremsstufe, durch den Wert der Absenkung des Druckes in der Hauptluftleitung L gesteuert, einem bestimmten Weg des Steuerkolbens 7. Sobald der vorbestimmte Bremsdruck C erreicht ist, hat auch der Ausgleichskolben 8 eine entsprechende Bewegung ausgeführt - nach welcher sowohl Ein- als auch Auslassventil geschlossen sind (Abschlussstellung).

Die Verstelleinrichtung 12 für die Einstellung der Laststellung des Steuerventils besteht aus einer Welle 121, welche ein exzentrisches Element 122 trägt. Die Welle kann von einer Seite des Steuerventils durch einen Bediensteten der Eisenbahn gedreht werden, um das Steuerventil an die aktuelle Beladung des Wagens anzupassen. Dabei wird das exzentrische Element an einen Anschlag für die Druckfeder 19 angenähert oder von dieser entfernt. Dies hat zur Folge, dass bei gleichem Weg des Ausgleichskolbens 8 durch die Druckfeder 19 eine größere oder eine kleinere Kraft ausgeübt wird. Insbesondere kann die Druckfeder 19 in der entfernten Position "leer" einen Abstand zum Ausgleichskolben 8 aufweisen, der auf dem ganzen möglichen Arbeitshub das Entstehen einer Federkraft verhindert.

Wie bereits beschrieben, entspricht der Bremszylinderdruck C infolge des Kräftegleichgewichtes am Ausgleichskolben 8 der auf die Kolbenfläche bezogenen Kraft der Druckfedern. Somit kann eine hohe Federkraft zur Erzielung eines hohen Bremszylinderdruckes C für ein beladenes Fahrzeug eingestellt werden, für ein leeres oder teilbeladenes Fahrzeug durch entgegengesetzte Verstellung des exzentrischen Elementes 122 eine geringere Federkraft für einen niedrigeren Bremsdruck erzielt.

Eine vorteilhafte Ausführung ergibt sich für das teilbeladene Fahrzeug insbesondere dann, wenn die Druckfeder eine progressive Kennlinie hat, oder wenn eine dritte Druckfeder speziell für die Stellung "teilbeladen" durch das exzentrische Element 122 spielfrei zum Ausgleichskolben eingerückt wird, wobei eine weitere Druckfeder für die Stellung "beladen" noch Spiel hat.

Für die Stellung "beladen" kann durch die progressive Kennlinie oder durch ein anfängliches Spiel der Druckfeder 19 ebenfalls ein Vorteil erzielt werden, weil die anfänglich relativ geringe Gesamt-Federkraft ein nicht zu scharfes erstes Einbremsen bewirkt, bei weiterem Arbeitshub steigen dann Federkraft und Bremszylinderdruck stärker an.

Die Verminderung des Bremszylinderdruckes C zum Lösen der Bremse erfolgt, gesteuert durch, ansteigenden Druck in der Hauptluftleitung L und/oder abfallenden Druck A, in umgekehrte Richtung. Nahe der Ausgangsstellung öffnet das Ventil 11 für den Abschluss des Kanals KZE wieder. Das Steuerventil ist dann für ein erneutes beschleunigtes Einbremsen bereit, sobald das Leitungsteil 3 einen Bremsbeginn erkennt und den Weg für die Druckluft aus der Hauptluftleitung L zum Kanal KZE freigibt.

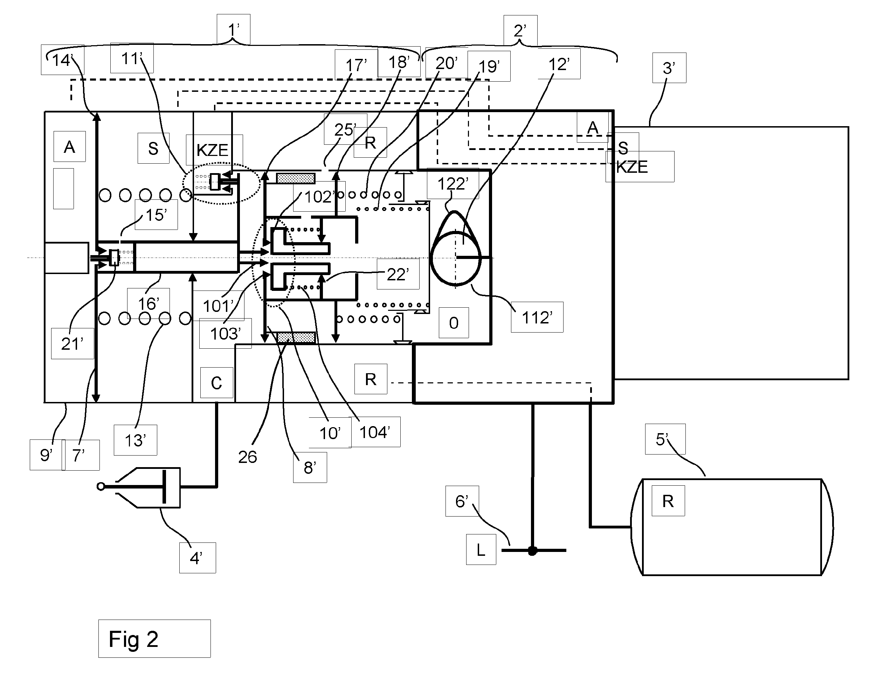

In Figur 2 ist eine alternative Ausführungsform dargestellt. Die Wirkungsweise dieser Ausführung entspricht der bereits vorstehend beschriebenen.

Anstelle der bei Figur 1 genannten, von einer Dichtung zu überschleifenden Düse in der Kolbenstange 16 für die Verbindung der Drücke A und S zur Erreichung einer bestimmten Unempfindlichkeit des Steuerventils ist ein Ventil 15' dargestellt, das durch den Steuerkolben 7' in einer geöffneten Stellung gehalten ist, solange sich dieser in oder nahe der Ausgangsstellung befindet.

Die Dichtungen 17' und 18' zur Zuführung 25' des Druckes R aus dem Vorratsluftbehälter 5' zum Einlassventilsitz 103' befinden sich hier am Ausgleichskolben 8', ebenso wie auch das Doppelsitzventil 10'.

Die Dichtungen 17' und 18' am Ausgleichskolben 8' und am Steuerkolben 7' dichten in dieser Ausführung in der Laufbuchse. Die Verstelleinrichtung befindet sich nun im Trägergehäuse statt im Gehäuse des Hauptteils 1' des Steuerventils 7'.

Die genannten Merkmale können unter bestimmten Bedingungen eine vereinfachte Konstruktion, eine erhöhte Zuverlässigkeit oder eine Kompatibilität mit älteren Steuerventilbauarten bewirken. Jede der aufgezählten Variationen kann einzeln in die Basisausführung integriert werden.

### Bezugszeichenliste

- 1: Hauptteil
- 2: Träger
- 3: Leitungsteil
- 4: Bremszylinder
- 5: Vorratsluftbehälter
- 6: Hauptluftleitung
- 7: Steuerkolben
- 8: Ausgleichskolben
- 9: Gehäuse
- 10: Doppelsitzventil
101 Auslassventil
102 Ventilkörper
103 Einlassventil
104 Druckfeder
- 11: Ventil für den Abschluss des Kanals KZE
111 Ventilkörper
112 Druckfeder
113 Ventilsitz
114 mechanische Verbindung, Stange
115 mechanische Verbindung, Anschlag
- 12: Verstelleinrichtung
- 13: Druckfeder
- 14: Dichtung
- 15: Düse
- 16: Kolbenstange
- 17: Dichtung
- 18: Dichtung
- 19: Druckfeder
- 20: Druckfeder
- 21: Ventil
- 22: Dichtung
- 23: Volumen für einen Druck S
- 24: Volumen für einen Druck A (Referenzdruck)
- 25: Zuführung
- 26: Hülse
- 27: Bohrung
- 28: Querbohrung alle Bezugszeichen in Fig. 2 mit ' in gleicher Entsprechung.

- A: Referenzdruck
- S: Steuerdruck
- L: Hauptluftleitung
- C: Bremszylinderdruck
- R: Vorratsluftdruck
- KZE: Kanal der zusätzlichen Entlüftung

## Patentansprüche

1. Steuerventil für selbsttätige Druckluftbremsen zur Bildung eines Bremszylinderdruckes in mindestens einem angeschlossenen Bremszylinder (4) nach Maßgabe einer Druckdifferenz zwischen einem Druck in einer angeschlossenen Hauptluftleitung (L) eines Zuges und einem gespeicherten Referenzdruck (A), bestehend aus einem Hauptteil (1), einem Leitungsteil (2) und einem Träger (3), mit einem Kanal der zusätzlichen Entlüftung (KZE) vom Leitungsteil über den Träger zum Hauptteil, wobei das Hauptteil (1) folgende Teile enthält:
einen Steuerkolben (7) mit einer Kolbenstange (16), der einerseits von dem Referenzdruck (A), andererseits von einem Steuerdruck (S) und mindestens einer Druckfeder (13) belastet ist, und
einen Ausgleichskolben (8), der vom Druck (C) des Bremszylinders (4) entgegen mindestens einer Druckfeder (20) belastet ist, und
ein Doppelsitzventil (10), bei dem durch Annäherung des Steuerkolbens (7) über eine Kolbenstange (16) ein Einlassventil (103) und durch Entfernung desselben ein Auslassventil (101) öffnet, wobei das Einlassventil (103) in einem Luftweg von einem Vorratsluftbehälter (5) in Richtung des Bremszylinders (4) liegt, wogegen das Auslassventil (101) in einen Luftweg vom Bremszylinder (4) zur Umgebung (0) liegt,
**dadurch gekennzeichnet, dass**
die Kolbenstange (16) eine Längsbohrung (27) und in diese mündende mindestens eine Querbohrung (28) aufweist, wobei die mindestens eine Querbohrung (28) in Ausgangsstellung des Steuerkolbens (7) nur durch einen Freiraum getrennt in der Nähe einer Zuführung (25) des Druckes (R) im Gehäuse aus dem Vorratsluftbehälter (5) befindlich ist,
und dass die Kolbenstange (16) von einer Hülse (26) umschlossen ist, welche in Ausgangsstellung der Kolbenstange (16) unterhalb der mindestens einen Querbohrung (28) einen Ringspalt zur Kolbenstange (16) bildet.

2. Steuerventil nach Anspruch 1,
**dadurch gekennzeichnet, dass** die Hülse (26) axial verschieblich ist und mit einer Einrichtung zur Verschiebung verbunden ist, die von der Außenseite des Gehäuses (9) zu betätigen ist.

3. Steuerventil nach Anspruch 1,
**dadurch gekennzeichnet, dass** die Hülse (26) ein Baukastenelement des Steuerventils ist, welches gegen eine gleichartige Hülse mit geänderten Abmessungen austauschbar angeordnet ist.

4. Schienenfahrzeug, enthaltend mindestens ein Steuerventil nach Anspruch 1.

## Claims

1. Control valve for automatic compressed-air brakes for generating a brake cylinder pressure in at leapistonst one connected brake cylinder (4) in accordance with a pressure difference between a pressure in a connected main brake pipe (L) of a train and a stored reference pressure (A), consisting of a main part (1), a pipe part (2) and a support (3), including a passage of additional ventilation (KZE) from said pipe part via said support to said main part, wherein said main part (1) includes the following elements:
one control piston (7) with a piston rod (16) loaded, on the one hand, by said reference pressure (A) and, on the other hand, by a control pressure (S) and at least one compression spring (13), and
one compensating piston (8) loaded by the pressure (C) of said brake cylinder (4) in opposition to at least one compression spring (20), and
one double-seat valve (10) wherein in response to the approach of said control piston (7) an inlet valve (103) opens via a piston rod (16) and in response to the removal of said control piston an outlet valve (10) opens, with said inlet valve (103) being disposed in an air path from a supply air reservoir (5) in a direction towards said brake cylinder (4), whereas said outlet valve (101) is disposed in an air path from said brake cylinder (4) towards the environment (0),
**characterised in that**
said piston rod (16) is provided with a longitudinal bore (27) and at least one transverse bore (28) opening into said longitudinal bore, wherein said at least one transverse bore (28) is located in the vicinity of a supply (25) of the pressure (R) in the housing out of said supply air reservoir (5), separated only by a free space, when said control piston (7) is in its initial position,
and **in that** said piston rod (16) is enclosed by a sleeve (26) that forms an annular gap relative to said piston rod (16) below said at least one transverse bore (28), when said piston rod (16) is in its initial position.

2. Control valve according to Claim 1,
**characterised in that** said sleeve (26) is axially displaceable and is connected to a means for displacement, which is provided for operation from the outside of said housing (9).

3. Control valve according to Claim 1,
**characterised in that** said sleeve (26) is a modular element of said control valve, which is disposed for replacement by a similar sleeve with modified dimensions.

4. Rail vehicle including at least one control valve according to Claim 1.

## Revendications

1. Soupape de commande pour freins à air comprimé automatiques, à engendre une pression de cylindre de freinage dans au moins un cylindre de freinage relié (4) en correspondance avec une différence en pression entre une pression dans une conduite principale d'air raccordée (L) d'un train et une pression de référence mémorisée (A), composée d'une partie principale (1), une partie de conduite (2) et un support (3), renfermant un passage d'aération additionnelle (KZE) à partir de ladite partie de conduite via ledit support vers ladite partie principale, dans laquelle ladite partie principale (1) comprend les éléments suivants :
un piston de commande (7) à une tige de piston (16) chargée, d'un côté, par ladite pression de référence (A) et, d'autre côté, par une pression de commande (S) et au moins un ressort de compression (13), et
un piston de compensation (8) chargé par la pression (C) dudit cylindre de freinage (4) à l'encontre d'un ressort de compression (20), et
une soupape à double siège (10), dans laquelle, en réponse à l'approche dudit piston de commande (7), une soupape d'entrée (103) s'ouvre via une tige de piston (16), et, en réponse à l'éloignement dudit piston de commande, une soupape de sortie (10) s'ouvre, à ladite soupape d'entrée (103) étant disposée dans une voie d'air d'un réservoir d'air (5) en une direction vers ledit cylindre de freinage (4), pendant que ladite soupape de sortie (101) est disposée dans une voie d'air à partir dudit cylindre de freinage (4) vers l'environnement (0),
**caractérisée en ce**
**que** ladite tige de piston (16) est munie d'un trou longitudinal (27) et au moins un trou transversal (28), qui s'ouvre dans ledit trou longitudinal, dans laquelle ledit
au moins un trou transversal (28) se trouve au voisinage d'une alimentation (25) de la pression (R) dans le carter en dehors dudit réservoir d'air (5), séparément seulement moyennant un libre espace, quand ledit piston de commande (7) se trouve en sa position de repos,
et en ce que ladite tige de piston (16) est renfermée par une douille (26), qui constitue une fente annulaire relative à ladite tige de piston (16) au-dessous dudit au moins un trou transversal (28), quand ladite tige de piston (16) se trouve en sa position de repos.

2. Soupape de commande selon la revendication 1,
**caractérisée en ce que** ladite douille (26) est déplaçable en sens axial, en étant reliée à un moyen de déplacement, qui est disposé pour l'actionnement à partir de l'extérieur dudit carter (9).

3. Soupape de commande selon la revendication 1,
**caractérisée en ce que** ladite douille (26) est un élément modulaire de ladite soupape de commande, qui est disposé pour un échange par une douille similaire aux dimensions modifiées.

4. Véhicule ferroviaire comprenant au moins une soupape de commande selon la revendication 1.
